(19) Europäisches Patentamt
European Patent Office
Office européen des brevets

(11) **EP 2 453 565 A1**

(12) # EUROPEAN PATENT APPLICATION

(43) Date of publication:
**16.05.2012 Bulletin 2012/20**

(51) Int Cl.:
**H02M 3/156** (2006.01)    **H02M 3/158** (2006.01)

(21) Application number: **10014631.5**

(22) Date of filing: **15.11.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **austriamicrosystems AG
8141 Unterpremstätten (AT)**

(72) Inventor: **Singnurkar, Pramod
8042 Graz (AT)**

(74) Representative: **Epping - Hermann - Fischer
Patentanwaltsgesellschaft mbH
Ridlerstrasse 55
80339 München (DE)**

(54) **Voltage converter and method for voltage conversion**

(57)     A voltage converter (10) comprises an input (11) for providing an input voltage (VIN), an output (12) for providing an output voltage (VPOS), a further output (23) for providing a further output voltage (VNEG) and a switching arrangement (13) that is coupled to the input (11) of the voltage converter (10), the output (12) of the voltage converter (10) and the further output (23) of the voltage converter (10). Furthermore, the voltage converter (10) comprises a current source (14) for controlling the output voltage (VPOS) by reducing the output voltage (VPOS) by means of a source current (IPC) through the current source (4). The source current (IPC) depends on the output voltage (VPOS) and a predetermined value of the output voltage (VPOS).

FIG 1A

EP 2 453 565 A1

**Description**

The present invention is related to a voltage converter and to a method for voltage conversion.

A voltage converter converts an input voltage into an output voltage. A boost converter provides an output voltage which has a higher value than the input voltage. Contrary to that, a buck converter generates an output voltage with a value which is lower than the value of the input voltage. A dual output converter generates the output voltage and a further output voltage.

Document DE 10206032418 A1 refers to a voltage converter comprising an inductor and four switches. The voltage converter generates a first and a second output voltage.

Document US 2009/0167264 A1 is related to a converter usable for dual voltage supply. The converter comprises an inductor, a first and a second rectifier element as well as a positive and a negative supply output.

It is an object of the present invention to provide a voltage converter and a method for voltage conversion with an increased flexibility for controlling the output voltage and the further output voltage.

This object is solved by a voltage converter according to claim 1 and a method for voltage conversion according to claim 15. Preferred embodiments are presented in the respective dependent claims.

In one embodiment, a voltage converter comprises an input, an output, a further output, a switching arrangement and a current source. The switching arrangement is coupled to the input of the voltage converter, the output of the voltage converter and the further output of the voltage converter.

The input of the voltage converter is designed for receiving an input voltage and providing the input voltage to the voltage converter. Correspondingly, the output of the voltage converter is designed for providing an output voltage. Moreover, a further output of the voltage converter is designed for providing a further output voltage. The output voltage and the further output voltage have opposite polarities. The switching arrangement receives the input voltage and converts the input voltage into the output voltage and the further output voltage. The switching arrangement provides the output voltage at the output of the voltage converter and the further output voltage at the further output of the voltage converter. The current source controls the absolute value of the output voltage by reducing the absolute value of the output voltage by means of a source current. The source current flows through the current source. The source current depends on the output voltage and a predetermined value of the output voltage.

It is an advantage of the voltage converter that the value of the output voltage not only depends on the switching arrangement but also on the current source. Therefore, the voltage converter comprises two mechanisms to achieve that the output voltage obtains a predetermined value with high accuracy and small fluctuations. The two mechanisms are operated in parallel.

In an embodiment, a duration of at least one phase of operation of the switching arrangement is controlled for controlling the sum of the absolute value of the output voltage and the absolute value of the further output voltage. Since the current source effects that the output voltage obtains the predetermined value of the output voltage and the switching arrangement effects that the sum of absolute value of the output voltage and the absolute value of the further output voltage obtains the sum of the predetermined value of the absolute value of the output voltage and the predetermined value of the absolute value of the further output voltage, the further output voltage obtains the predetermined value of the further output voltage.

In an embodiment, the value of the source current depends on the difference between the output voltage and the predetermined value of the output voltage. The source current reduces the output voltage in a controlled manner.

In an embodiment, a first terminal of the current source is coupled to the output of the voltage converter. A second terminal of the current source is arranged such that a source current through the current source reduces the absolute value of the output voltage. The second terminal of the current source can be connected to the input terminal of the voltage converter or to a reference potential terminal.

In an embodiment, the switching arrangement is implemented as a capacitive switching arrangement. The switching arrangement comprises at least one capacitor. The switching arrangement generates the output voltage by periodically changing the connection of the input of the voltage converter and the output of the voltage converter to a first and a second terminal of the at least one capacitor. Thus, the voltage converter is implemented as a capacitive direct current/ direct current converter, abbreviated DC/DC converter.

In an alternative embodiment, the switching arrangement is implemented as an inductive switching arrangement. Thus, the switching arrangement comprises an inductor. The input voltage generates a current in the inductor for storing energy in the inductor in a first phase of operation. The energy stored in the inductor is used to generate the output voltage in a second phase of operation. The voltage converter is an inductive DC/DC converter. The voltage converter comprises the maximum of one inductor. The duration of at least one phase of the first phase and the second phase is controlled for controlling the sum of the absolute value of the output voltage and the absolute value of the further output voltage. By controlling the duration of the at least one phase, the difference between said sum and the sum of the predetermined value of the absolute value of the output voltage and of the predetermined value of the absolute value of the further output voltage is minimized.

In an embodiment, the switching arrangement is designed for a course tuning of the output voltage and the further output voltage, wherein the current source is implemented for a fine tuning of the output voltage.

The voltage converter can be implemented as a buck or a boost converter.

In an embodiment, the voltage converter can be designed as a dual polarity converter. The output voltage and the further output voltage have opposite polarities in relation to a reference potential at a reference potential terminal.

In an embodiment, the voltage converter comprises a further current source. The further current source controls the absolute value of the further output voltage by reducing the absolute value of the further output voltage by means of a further source current. The further source current flows through the further current source. The further source current depends on the further output voltage and a predetermined value of the further output voltage. The further current source may be arranged between the further output of the voltage converter and the reference potential terminal. The control loop comprising the current source and the control loop comprising the further current source are sufficient for the control of the output voltage and the further output voltage. The durations of the different phases of operation may be constant.

In an alternative embodiment, the output voltage and the further output voltage are controlled by the current source and by the determination of the durations of the first and/or second phase, without the further current source.

In an alternative embodiment, the output voltage and the further output voltage are controlled by the current source, the further current source and by the determination of the durations of the phases of operation, for example the first and/or the second phase. The durations of the phases may be controlled such that the absolute value of the output voltage is larger than the predetermined value of the absolute value of the output voltage and the absolute value of the further output voltage is larger than the predetermined value of the absolute value of the further output voltage. For fine tuning, the current source reduces the absolute value of the output voltage and the further current source reduces the absolute value of the further output voltage such that these two output voltages achieve their predetermined values.

In an embodiment, a semiconductor body comprises the voltage converter, wherein the inductor is an external device that is coupled to the semiconductor body. Thus, the voltage converter besides the inductor is arranged on a first area of the semiconductor body. A single semiconductor body can comprise the voltage converter with the exception of the inductor.

In an embodiment, a method for voltage conversion comprises converting an input voltage into an output voltage and a further output voltage. Moreover, the method comprises controlling the output voltage by reducing the output voltage by means of a source current that depends on the output voltage and a predetermined value of the output voltage.

Thus, the value of the output voltage depends on the conversion of the input voltage into the output voltage by a switching arrangement as well as on the source current. The source current is generated by a current source for controlling the output voltage. The source current reduces the absolute value of the output voltage.

In an embodiment, a non-zero value of the source current leads to a decrease of the absolute value of the output voltage. The current source can be a controllable current source. The current source can comprise an active device such as a transistor. The transistor can be controlled in dependency of the output voltage and the predetermined value of the output voltage.

The following description of figures of exemplary embodiments may further illustrate and explain the invention. Devices with the same structure and the same effect, respectively, appear with equivalent reference symbols. In so far as circuits or devices correspond to one another in terms of their function in different figures, the description thereof is not repeated for each of the following figures.

FIGs. 1A to 1D       show exemplary embodiments of a voltage converter according to the principle presented,

FIGs. 2A and 2B      show exemplary embodiments of current sources,

FIG. 3               shows an exemplary arrangement comprising the voltage converter of the principle presented and

FIG. 4A and 4B       show exemplary characteristics of a voltage converter of the principle presented.

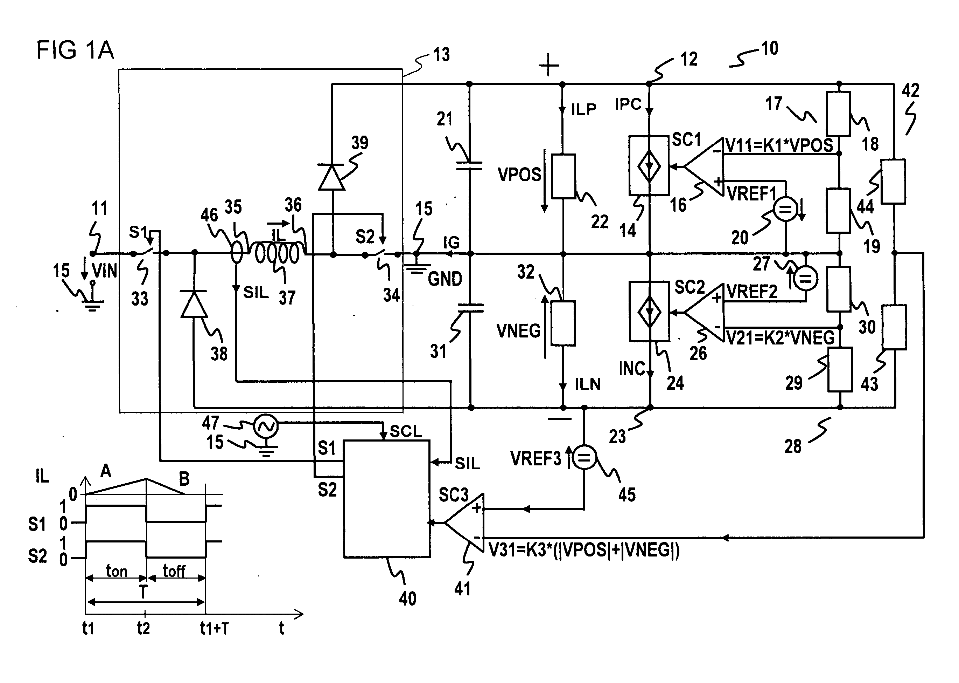

FIG. 1A shows an exemplary embodiment of a voltage converter according to the principle presented. The voltage converter 10 comprises an input 11, an output 12 and a switching arrangement 13. The switching arrangement 13 couples the input 11 of the voltage converter 10 to the output 12 of the voltage converter 10. Moreover, the voltage converter 10 comprises a current source 14. The current source 14 is arranged between the output 12 of the voltage converter and a reference potential terminal 15. A first terminal of the current source 14 is connected to the output 12 of the voltage converter 10. A second terminal of the current source 14 is connected to the reference potential terminal 15.

Moreover, the voltage converter 10 comprises an amplifier 16. A first input of the amplifier 16 is coupled to the output 12 of the voltage converter 10. A voltage source 20 couples a second input of the amplifier 16 to the reference potential terminal 15. An output of the amplifier 16 is connected to a control terminal of the current source 14. Additionally, the voltage converter 10 comprises a voltage divider 17 having a first and a second divider resistor 18, 19. The voltage divider 17 is arranged between the output 12 of the voltage converter 10 and the reference potential terminal 15. A node between the first and the second divider resistor 18, 19 is connected to the first input of the amplifier 16. A storage capacitor 21 is arranged between the output 12 of the voltage converter 10 and the reference potential terminal 15. A load resistor 22 is coupled between the output 12 of the voltage converter 10 and the reference potential terminal 15 and represents a load.

Moreover, the voltage converter 10 comprises a further output 23. A further current source 24 of the voltage converter 10 couples the further output 23 of the voltage converter 10 to the reference potential terminal 15. A first terminal of the further current source 24 is connected to the further output 23 of the voltage converter 10. A second terminal of the further current source 24 is connected to the reference potential terminal 15. A further amplifier 26 of the voltage converter 10 has a first input which is coupled to the further output 23 of the voltage converter 10. A second input of the further amplifier 26 is coupled to the reference potential terminal 15 via a further voltage source 27. A further voltage divider 28 of the voltage converter 10 comprises a third and a fourth divider resistor 29, 30. The further voltage divider 28 is arranged between the further output 23 of the voltage converter 10 and the reference potential terminal 15. A node between the third and the fourth divider resistor 29, 30 is connected to the first input of the further amplifier 26. An output of the further amplifier 26 is connected to a control terminal of the further current source 24.

The voltage converter 10 comprises a further storage capacitor 31 which couples the further output 23 of the voltage converter 10 to the reference potential terminal 15. A further resistor 32 also represents the load and is connected between the further output 23 of the voltage converter 10 and the reference potential terminal 15.

The switching arrangement 13 comprises a first and a second switch 33, 34. The first and the second switch 33, 34 are implemented as field-effect transistors. The first switch 33 couples the input 11 of the voltage converter 10 to a first coupling terminal 35 of the switching arrangement 13. The second switch 34 couples a second coupling terminal 36 of the switching arrangement 13 to the reference potential terminal 15. The voltage converter 10 comprises an inductor 37 which is arranged between the first and the second coupling terminal 35, 36. A first rectifier 38 of the switching arrangement 13 is arranged between the further output 23 of the voltage converter 10 and the first coupling terminal 35. Correspondingly, a second rectifier 39 of the switching arrangement 13 couples the second coupling terminal 36 to the output 12 of the voltage converter 10. The first and the second rectifier 38, 39 are realized as diodes.

Furthermore, the voltage converter comprises a controlling unit 40. A first output of the controlling unit 40 is connected to a control terminal of the first switch 33. Similarly, a second output of the controlling unit 40 is connected to a control terminal of the second switch 34. Moreover, the voltage converter comprises a controlling amplifier 41. The controlling amplifier 41 has an output which is connected to an input of the controlling unit 40. A first input of the controlling amplifier 41 is coupled to the output 12 of the voltage converter 10 and to the further output 23 of the voltage converter 10. An additional voltage divider 42 comprises a series circuit of a fifth and a sixth divider resistor 43, 44. The additional voltage divider 42 is arranged between the output 12 of the voltage converter 10 and the further output 23 of the voltage converter 10. A node between the fifth and the sixth divider resistor 43, 44 is connected to the first input of the controlling amplifier 41. A reference voltage source 45 couples the second input of the controlling amplifier 41 to the further output 23.

Further on, the switching arrangement 13 comprises a current sensor 46. The current sensor 46 is implemented such that the current sensor 46 measures the current through the inductor 37. An output of the current sensor 46 is connected to an input of the controlling unit 40. Additionally, the controlling unit 40 comprises a clock input. An output of an oscillator 47 is connected to the clock input of the controlling unit 40.

An input voltage VIN is provided to the input 11 of the voltage converter 10. The switching arrangement 13 receives the input voltage VIN and generates the output voltage VPOS. The output voltage VPOS is provided to the output 12 of the voltage converter 10. An input voltage V11 which is derived from the output voltage VPOS is applied to the first input of the amplifier 16. The voltage source 20 generates a reference voltage VREF1. The reference voltage VREF1 is applied to the second input of the amplifier 16. The amplifier 16 generates a control signal SC1 which is applied to the control terminal of the current source 14. The control signal SC1 depends on the difference between the input voltage V11 derived from the output voltage VPOS and the reference voltage VREF1. The voltage divider 17 generates the input voltage V11 derived from the output voltage VPOS. The input voltage V11 equals K1*VPOS. The current source 14 generates a source current IPC which flows from the output 12 of the voltage converter 10 to the reference potential terminal 15. A load current ILP flows through the load resistor 22. The output voltage VPOS is smoothed by the capacitor 21. The height of the source current IPC depends on the difference between the input voltage V11 which is derived from the output voltage VPOS and the reference voltage VREF1.

Correspondingly, the switching arrangement 13 provides a further output voltage VNEG to the further output 23 of the voltage converter 10. The output voltage VPOS and the further output voltage VNEG have opposite polarities in relation to a reference potential GND. The reference potential GND can be tapped off at the reference potential terminal 15. The output voltage VPOS and the further output voltage VNEG have different absolute values. The further current source 24 generates a further source current INC. The further source current INC flows from the further terminal 23 to the reference potential terminal 15. The first input of the further amplifier 26 receives a further input voltage V21 which is derived from the further output voltage VNEG. The further input voltage V21 equals K2*VNEG. The further voltage source 27 generates a further reference voltage VREF2. The further reference voltage VREF2 is provided to the second input of the further amplifier 26. The further voltage divider 28 generates the further input voltage V21. The further amplifier 26 generates a further control signal SC2 which is provided to the control terminal of the further current source 24. The further control signal SC2 depends on the difference between the further input voltage V21 and the further reference voltage VREF2. A further load current ILN flows through the further resistor 32. The further output voltage VNEG is smoothed by the further storage capacitor 31.

The reference voltage source 45 generates a set voltage VREF3 that is an additional reference voltage. The set voltage VREF3 is provided to the second input of the controlling amplifier 41. A first input voltage V31 is supplied to the first input of the controlling amplifier 41 and depends on the output voltage VPOS and the further output voltage VNEG. The first input voltage V31 is generated by the additional voltage divider 42. The first input voltage V31 can be calculated according to the following equation:

$$V31 = k3 \cdot ( |VPOS| + |VNEG| ),$$

wherein k3 is a constant, |VPOS| is the absolute value of the output voltage and |VNEG| is the absolute value of the further output voltage. The controlling amplifier 41 generates a controlling signal SC3 which is provided to the controlling unit 40. The oscillator 47 generates a clock signal SCL. The clock signal SCL is provided to the clock input of the controlling unit 40.

The controlling unit 40 determines a first signal S1 which is provided to the control terminal of the first switch 33. Similarly, a second signal S2 of the controlling unit 40 is applied to the control terminal of the second switch S2. An insert in FIG. 1A shows the first and the second signal S1, S2 depending on the time t. A cycle of the first and the second signal S1, S2 has a cycle time T. The cycle comprises a first and a second phase A, B of operation. During the first phase A, the first and the second signal S1, S2 have the logical value 1. Thus, during the first phase A, the first and the second switch 33, 34 are in a conducting state. The first phase A has a duration ton. The second phase B has a duration toff. During the second phase B, the first and the second signal S1, S2 have the logical value 0. Thus, the first and the second switch 33, 34 are in an open state during the second phase B. The cycle does not comprise a third phase. The cycle only comprises two phases. The cycle is periodically repeated. The cycle time T is controlled by the clock signal SCL. The cycle time T is constant. The cycle time T equals ton + toff. The duty cycle equals ton / T.

During the first phase A, a current flows from the input 11 of the voltage converter 10 via the first switch 33, the inductor 37 and the second switch 34 to the reference potential terminal 15. Thus, energy is stored in the inductor 37. Since the first and the second switch 33, 34 are open in the second phase B, the energy stored in the inductor 37 results in a current which flows from the further output 23 of the voltage converter 10 via the first rectifier 38, the inductor 37 and the second rectifier 39 to the output 12 of the voltage converter 10. The inductor current IL which flows through the inductor 37 rises in the first phase A and is reduced during the second phase B. Depending on the actual values of the output voltage VPOS and the further output voltage VNEG, the inductor current IL decreases in a first part of the second phase B and is zero during a second part of the second phase B.

The first and the second switch 33, 34 are turned on at a first point of time t1. They are together turned off at a second point of time t2. Thus, in the second phase B, the absolute value of the output voltage VPOS and the absolute value of the further output voltage VNEG increases. The sum of the absolute value of the output voltage VPOS and the absolute value of the further output voltage VNEG depends on the duty cycle.

The current source 14 is designed as a load balancing current source. The current source 14 and the amplifier 16 regulate the output voltage VPOS. The further output voltage VNEG is regulated by the further current source 24 and the further amplifier 26. Thus, the switching arrangement 13 is designed to provide the output voltage VPOS with a value which is larger than the predetermined value of the output voltage VPOS. Moreover, the switching arrangement 13 provides the further output voltage VNEG with an absolute value which is larger than the predetermined value of the further output voltage VNEG. The further current source 24 is also foreseen as a load balancing current source. By means of the current source 14, the further current source 24, the amplifier 16 and the further amplifier 26, the absolute value of the output voltage VPOS and the absolute value of the further output voltage VNEG are reduced such that both output voltages VPOS, VNEG obtain their predetermined values. The absolute value of the predetermined value of the output voltage VPOS is different from the absolute value of the predetermined value of the further output voltage VNEG.

The amplifier 16 and the further amplifier 26 have a first bandwidth BW1. The controlling amplifier 41 has a second bandwidth BW2. Preferably, the first bandwidth BW1 is larger than the second bandwidth BW2. Thus, the second bandwidth BW2 of the controlling amplifier 41 determines the overall bandwidth of the voltage converter 10.

It is an advantage of the voltage converter 10 that the average value of the inductor current IL is small. The small average value results in a high efficiency of the voltage conversion. A ground current IG from the load 22, 32 to the reference potential terminal 15 is reduced. The switching arrangement 13 advantageously comprises only a single coil. The number of inductors comprised by the switching arrangement 13 is one. Thus, the voltage converter 10 is realized as a single inductor converter. Due to the low current values in the inductor 37, the size of the first and the second switch 33, 34 can be reduced. In addition, also the size of the inductor 37 can be minimized. Consequently, the overall size of the voltage converter 10 is small. The voltage converter 10 obtains a high bandwidth. Power ground spikes can advantageously be avoided. The voltage converter 10 is implemented as a dual output converter.

In an embodiment, the output voltage VPOS is regulated by means of the current source 14 and the amplifier 16. The controlling amplifier 41 and the controlling unit 40 set the duration ton of the first phase A and the duration toff of the second phase B such that the further output voltage VNEG achieves the predetermined value. According to this embodiment, the further current source 24, the further amplifier 26 and the further voltage divider 28 are used for fine tuning of the further output voltage VNEG or can be set inactive or can be omitted.

In an alternative embodiment, the further output voltage VNEG is regulated by means of the further current source 24 and the further amplifier 26. The switching arrangement 13 regulates the output voltage VPOS. The current source 14, the amplifier 16 and the voltage divider 17 are used for fine tuning of the output voltage VPOS or can be set inactive or can be omitted.

In an alternative, not shown embodiment, the current source 14 is coupled between the output 12 of the voltage converter 10 and the input 11 of the voltage converter 10. If the output voltage VPOS has a value which is higher than the predetermined value, the energy stored in the capacitor 21 is reduced by the source current flow to the input 11 of the voltage converter 10. The source current IPC can charge a battery which is not shown and is connected to the input terminal 11. This leads to a further increase of efficiency.

In an alternative, not shown embodiment, the further current source 24 is coupled between the further output 23 of the voltage converter 10 and the input 11 of the voltage converter 10.

In an alternative, not shown embodiment, at least one circuit of a group comprising the first rectifier 38 and the second rectifier 39 is realized in the form of a switch. The switch can be implemented as a field-effect transistor. The controlling unit 40 comprises an additional output which is connected to a control terminal of the switch. In this embodiment, the first and/or the second rectifier 38, 39 are actively controlled.

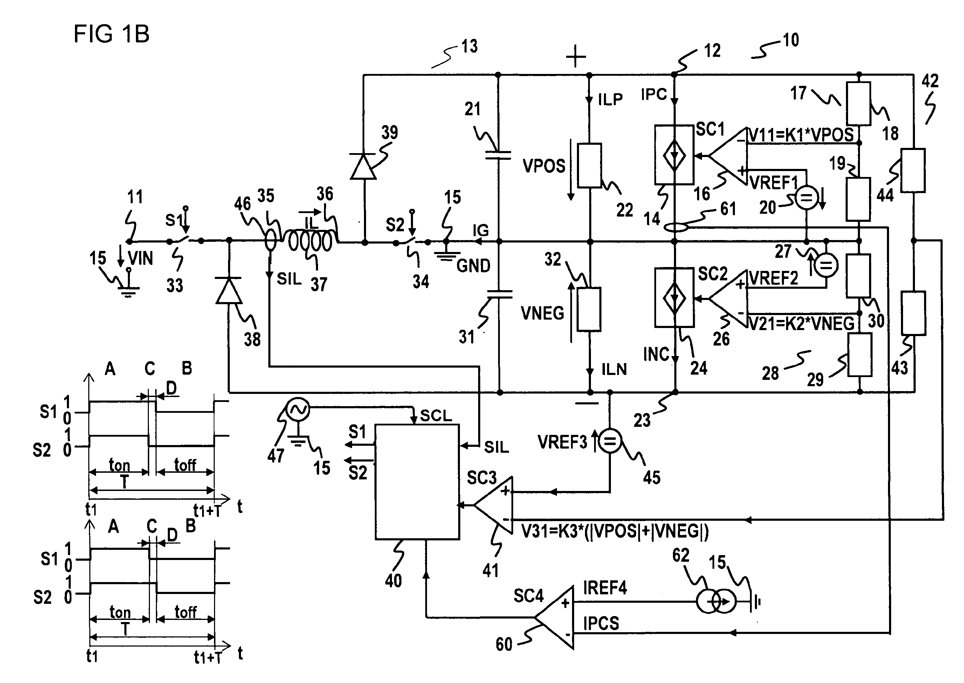

FIG. 1B shows a further exemplary embodiment of a voltage converter according to the principle presented. The voltage converter 10 according to FIG. 1B is a further development of the voltage converter shown in FIG. 1A. The voltage converter 10 additionally comprises a further controlling amplifier 60 with an output which is connected to an input of the controlling unit 40. A first input of the further controlling amplifier 60 is connected to a further current sensor 61. The further current sensor 61 is arranged in series to the current source 14. The further current sensor 61 is implemented to measure the source current IPC which is provided by the current source 14. A second input of the further controlling amplifier 60 is connected to a current signal source 62.

The current signal source 62 provides a reference signal IREF4 to the second input of the further controlling amplifier 60. The further current sensor 61 generates a further current signal IPCS which is proportional to the source current IPC. A further controlling signal SC4 provided by the further controlling amplifier 60 depends on the difference between the further current sensor signal IPCS and the reference signal IREF4. The reference signal IREF4 and the further current sensor signal IPCS are provided as currents.

A cycle comprises the first and the second phase A, B as well as a third phase C. Thus, the third phase C is arranged between the first phase A and the second phase B. The third phase C lasts for a duration D. The first and the second phase according to FIG. 1B are equal to the first and the second phase A, B shown in FIG. 1A. In the third phase C, the first signal S1 has the logical value 1 and the second signal S2 has the logical value 0 in case that the value of the output voltage VPOS is smaller than the predetermined value for the output voltage VPOS. In the third phase C, the first switch 33 is in a closed state and the second switch 34 is in an open state. Thus, energy stored in the inductor 37 preferably results in a current flow through the second rectifier 39 to the storage capacitor 21.

In case the absolute value of the further output voltage VNEG is smaller than the absolute value of the predetermined value of the further output voltage VNEG, the first signal S1 has the logical value 0 and the second signal S2 has the logical value 1 in the third phase C. In that case, the first switch 33 is in an open state and the second switch 34 is in a closed state in the third phase C. Thus, energy stored in the inductor 37 preferably results in an increase of the absolute value of the further output voltage VNEG. To summarize, the first and the second switch 33, 34 are turned on at the same time, namely the fist time t1, but are turned off at different times.

In the voltage converter according to FIG. 1B, the output voltage VPOS is regulated by the current source 14 and the amplifier 16. The further output voltage VNEG is regulated by means of the controlling amplifier 41. The duration ton of the first phase A depends on the signal provided by the controlling amplifier 41. The further controlling amplifier 60 regulates the source current IPC to the value of the signal IREF4 by regulating the variable duration D of the phase C. With the use of the third phase C, more energy can be supplied to the output 12 or to the further output 23. In the voltage converter 10 according to FIG. 1B, the difference between the absolute value of the output voltage VPOS and the absolute value of the further output voltage VNEG is regulated by means of the third phase C. Thus, the output voltage VPOS is regulated by the current source 14 which is designed as a load balancing current source. By using the third phase C, the time in which the first switch 33 is in an open state is different from the time in which the second switch 34 is in an open state during a cycle. Thus, the off-times toff of the first and the second switch 33, 34 are unbalanced. By the unbalancing, the current source 14 is further regulated to achieve a small value of the source current IPC. It is an advantage of the voltage converter according to FIG. 1B that the current source 14 has a reduced source current IPC so that the efficiency is increased.

A first control loop controls that the difference between the absolute value of the output voltage VPOS and the predetermined value of the absolute value of the output voltage VPOS is minimized. The first control loop comprises the current source 14 and the amplifier 16.

A second control loop controls that the difference between the sum of the absolute value of the output voltage VPOS and the absolute value of the further output voltage VNEG on the one hand and the sum of the predetermined value of the absolute value of the output voltage VPOS and of the predetermined value of the absolute value of the further output voltage VNEG on the other hand is minimized. The second loop comprises the switching arrangement 13, the controlling amplifier 41 and the controlling unit 40. The first and the second control loop are separated. The two loops do not comprise a common circuit part. The first and the second control loop operate in an independent way.

The further controlling amplifier 60 has a third bandwidth BW3. Even if the value of the third bandwidth BW3 of the further controlling amplifier 60 is smaller than the second bandwidth BW2 of the controlling amplifier 41, the overall bandwidth of the voltage converter 10 still remains the second bandwidth BW2 of the controlling amplifier 41. Since the further controlling amplifier 60 regulates the internal source current IPC of the current source 14, the third bandwidth BW3 of the further controlling amplifier 60 does not influence the output voltage regulation bandwidth.

In an alternative embodiment, the further current source 24, the further amplifier 26 and the further voltage divider 28 are used for fine tuning of the further output voltage VNEG or can be switched off or can be omitted.

In an alternative, not shown embodiment, the further current sensor 61 is arranged in series to the further current source 24. The further controlling amplifier 60 then compares a further current sensor signal INCS of the further current sensor 61 with the reference signal IREF4. In this embodiment, the voltage converter 10 comprises the further current source 24, the further amplifier 26 and the further voltage divider 28. The current source 14, the amplifier 16 and the voltage divider 17 can be used for fine tuning of the output voltage VPOS or are turned off or can be omitted.

In an alternative, not shown embodiment, the reference signal IREF4 and the further current sensor signal IPCS, INCS are provided as voltages.

In an alternative, not shown embodiment, at least one amplifier out of a group comprising the amplifier 16, the further amplifier 26, the controlling amplifier 41 and the further controlling amplifier 60 is realized as a comparator.

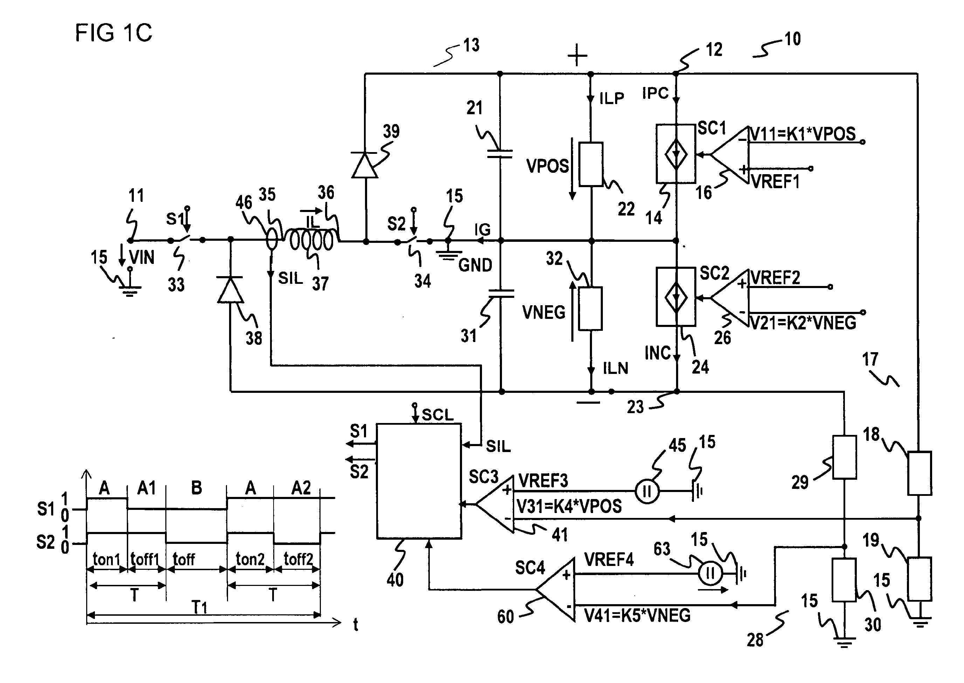

FIG. 1C shows a further exemplary embodiment of a voltage converter according to the principle presented. The voltage converter 10 according to FIG. 1C is a further development of the voltage converter shown in FIGs. 1A and 1B. The voltage converter 10 comprises the controlling amplifier 41 and the further controlling amplifier 60. The first input of the controlling amplifier 41 is coupled to the output 12 of the voltage converter 10. Correspondingly, the first input of the further controlling amplifier 60 is coupled to the further output 23 of the voltage converter 10. The reference voltage source 45 couples the second input of the controlling amplifier 41 to the reference potential terminal 15. A further reference voltage source 63 couples the second input of the further controlling amplifier 60 to the reference potential terminal 15. The voltage converter 10 comprises the voltage divider 17 which is arranged between the output 12 of the voltage converter 10 and the reference potential terminal 15. A tap between the first divider resistor 18 and the second divider resistor 19 is coupled to the first input of the controlling amplifier 41. Furthermore, the voltage converter 10 comprises the further voltage divider 28. A node between the third and the fourth divider resistor 29, 30 is connected to the first input of the further controlling amplifier 60.

The first controlling signal SC3 provided by the controlling amplifier 41 depends on the difference between the set voltage VREF3 and the first input voltage V31 which is equal to K4*VPOS. The further controlling signal SC4 at the output of the further controlling amplifier 60 depends on the difference of the second input voltage V41 that is equal to K5*VNEG and the further set voltage VREF4.

A cycle has a cycle time T1 and comprises five phases. The five phases are in this order: the first phase A according to FIG. 1A, a fourth phase A1, the second phase B according to FIG. 1A, the first phase A for the second time according to FIG. 1A, and a fifth phase A2. In the fourth phase A1, the first signal S1 has the logical value 0 and the second signal S2 has the logical value 1. Thus, the first switch 33 is in an open state and the second switch 34 is in a conducting state. In the fourth phase A1, energy stored in the inductor 37 is used to increase the energy stored in the further capacitor 31, increasing the absolute value of the further output voltage VNEG. In the fifth phase A2, the first signal S1 has the logical value 1 and the second signal S2 has the logical value 0. Thus, the first switch 33 is in a conducting state and the second switch 34 is in an open state. In the fifth phase A2, the energy stored in the inductor 37 is used to increase the value of the output voltage VPOS by storing energy in the capacitor 21. The cycle time T is the sum of the duration ton1 of the first phase A and the duration toff1 of the following fourth phase A1. The second phase B has the duration toff. Similarly, the cycle time T is the sum of the duration ton2 of the first phase A after the second phase B and the duration toff2 of the fifth phase A2. The duration T1 of the complete cycle and the cycle time T can be calculated according to the following equations:

$$T = ton1 + toff1 \quad and \quad T = ton1 + toff2,$$

$$T1 = 2 \cdot T + toff = ton1 + toff1 + toff + ton2 + toff2$$

In the first part of the complete cycle with the duration T1, only the value of the output voltage VPOS is regulated. Regulation is achieved by controlling the duration ton1 of the first phase A. In a further part of the complete cycle, only the absolute value of the further output voltage VNEG is regulated. This is performed by controlling the duration ton2 of the first phase A which follows the second phase B.

Advantageously, the value of the output voltage VPOS and the value of the further output voltage VNEG are separately regulated. Losses in the voltage converter 10 in case no load is connected to the voltage converter 10 or only a load with low power consumption is connected to the voltage converter 10 can be substantially reduced since a maximum of one switch of the group comprising the first and the second switch 33, 34 is switched in one cycle with the duration T.

In an alternative, not shown embodiment, the second phase B can be omitted such that the duration toff of the second phase B is zero.

The current source 14, the further current source 24, the amplifier 16 and the further amplifier 26 can be turned off during the operation of the voltage converter according to the phases shown in FIG. 1C. This reduces power losses of the voltage converter 10.

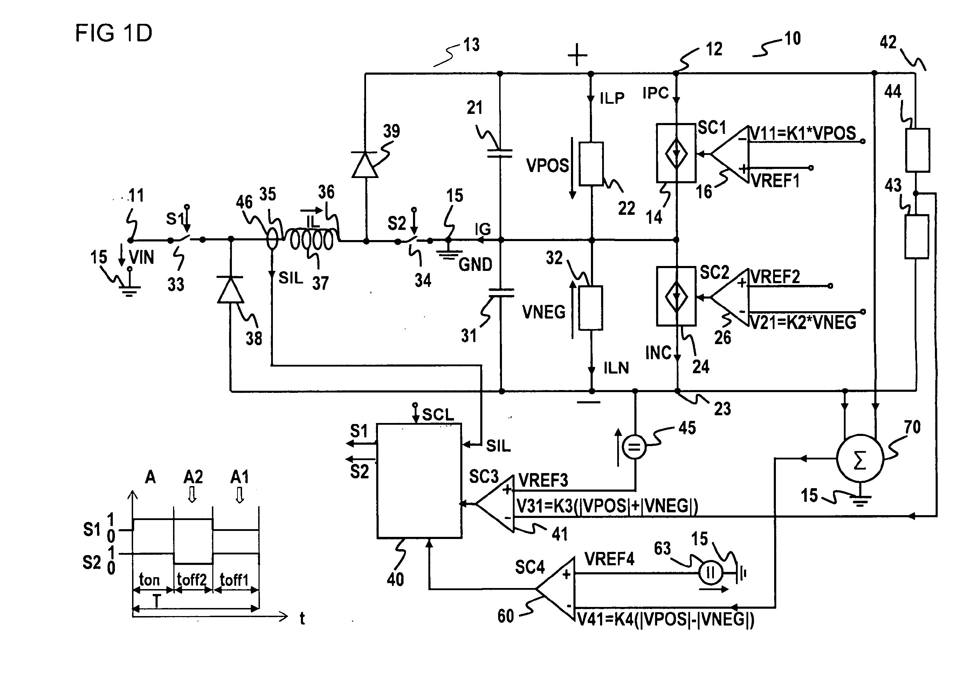

FIG. 1D shows a further exemplary embodiment of a voltage converter according to the principle presented. The voltage converter 10 according to FIG. 1D is a further development of the voltage converter shown in FIGs. 1A to 1C. The voltage converter 10 according to FIG. 1D comprises the controlling amplifier 41 and the further controlling amplifier 60. The first input of the controlling amplifier 41 is coupled to the output 12 of the voltage converter 10 and to the further output 23 of the voltage converter 10. This coupling is performed by the additional voltage divider 42 which is already described in FIG. 1A. The second input of the controlling amplifier 41 is coupled via the reference voltage source 45 to the further output 23 of the voltage converter 10.

The first input of the further controlling amplifier 60 is also coupled to the output 12 of the voltage converter 10 and to the further output 23 of the voltage converter 10. The voltage converter 10 comprises an adder 70. A first input of the adder 70 is coupled to the output 12 of the voltage converter 10 and a second input of the adder 70 is coupled to the further output 23 of the voltage converter 10. An output of the adder 70 is connected to the first input of the further controlling amplifier 60. The second input of the further controlling amplifier 60 is coupled via the further reference voltage source 63 to the further output 23 of the voltage converter 10.

The adder 70 generates the second input voltage V41 by adding the output voltage VPOS and the further output voltage VNEG with respect to the reference potential GND at the reference potential terminal 15. Thus, the first input voltage V31 that is provided to the first input of the controlling amplifier 41 and the second input voltage V41 that is provided to the first input of the further controlling amplifier 60 can be calculated according to the following equations:

$$V31 = k3 \cdot (|VPOS| + |VNEG|)$$

and

$$V41 = K4 \cdot (|VPOS| - |VNEG|),$$

wherein k3 and k4 are constants. The further controlling amplifier 60 generates the further controlling signal SC4 which depends on the difference between the second input voltage V41 and the further set voltage VREF4. Similarly, the controlling signal SC3 provided at the output of the controlling amplifier 41 depends on the difference between the first input voltage V31 and the set voltage VREF3. A cycle with the cycle time T comprises three phases in this order: the first phase A, the fifth phase A2 and the fourth phase A1. The fifth phase A2 has the duration toff2 and the fourth phase A1 has the duration toff1. The cycle time T can be calculated according to the following equation:

$$T = ton + toff2 + toff1$$

In the first phase A, energy is stored in the inductor 37. During the fifth phase A2, a portion of this energy is used to increase the output voltage VPOS. After that, a remaining portion of the energy stored in the inductor 37 is used to increase the absolute value of the further output voltage VNEG. The sum of the absolute value of the output voltage VPOS and of the absolute value of the further output voltage VNEG is regulated by means of the controlling amplifier 41 which regulates the duration ton of the first phase A. The value of the output voltage VPOS then is regulated by controlling the duration toff2 of the fifth phase A2. Furthermore, the absolute value of the further output voltage VNEG is regulated by means of the duration toff1 of the fourth phase A2. The durations toff1, toff2 of the fourth and the fifth phase A2, A2 are regulated by means of the further controlling amplifier 60.

It is an advantage of the voltage converter 10 that the cycle with the duration T exactly comprises three phases A, A2, A1 and the regulation of the output voltage VPOS and of the further output voltage VNEG is achieved by regulating the duration ton of the first phase A, and the ratio of the duration toff2 of the fifth phase A2 to the duration toff1 of the fourth phase A1. The current sources 14, 24 can be switched off.

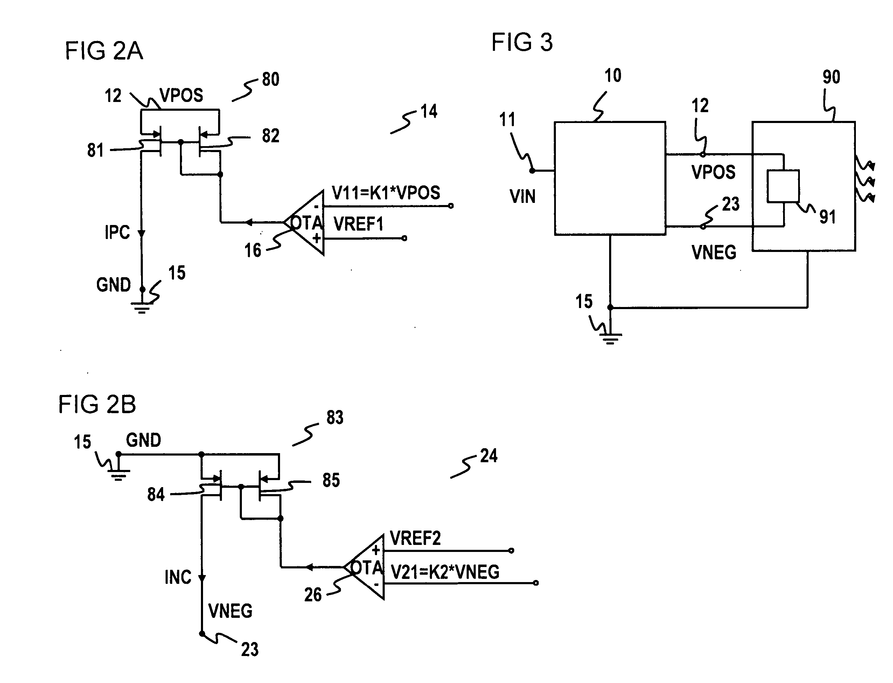

FIGs. 2A and 2B show exemplary embodiments of the current source 14 and the further current source 24. The current source 14 and the further current source 24 according to FIGs. 2A and 2B can be inserted in the voltage converter of FIGs. 1A to 1D. According to FIG. 2A, the current source 14 comprises a current mirror 80. The current mirror 80 connects the output 12 of the voltage converter 10 to the reference potential terminal 15. The current mirror 80 is controlled by the amplifier 16. The current mirror 80 comprises a first and a second mirror transistor 81, 82. A controlled section of the first mirror transistor 81 is arranged between the output 12 of the voltage converter 10 and the reference potential terminal 15. A controlled section of the second mirror transistor 82 is arranged between the output 12 of the voltage converter 10 and the output of the amplifier 16. A control terminal of the first mirror transistor 81 is connected to a control terminal of the second mirror transistor 82 and to the output of the amplifier 16. The amplifier 16 is implemented as an operational transconductance amplifier, abbreviated OTA.

The source current IPC flows through the first mirror transistor 81. Since the amplifier 16 provides a current at its output and the first and the second mirror transistor 81, 82 show input capacitances at their control inputs, charging of the control inputs needs time. The implementation of the amplifier 16 in the form of OTA advantageously leads to a low rise of the source current IPC. Thus, an abrupt change of the control voltages at the control terminals of the mirror transistors 81, 82 and, therefore, an abrupt increase of the source current IPC is avoided.

According to FIG. 2B, the further current source 24 comprises a further current mirror 83. The further current mirror 83 comprises a third and a fourth mirror transistor 84, 85. A controlled section of the third mirror transistor 84 couples the further output 23 of the voltage converter 10 to the reference potential terminal 15. A controlled section of the fourth mirror transistor 85 couples the reference potential terminal 15 to the output of the further amplifier 26. A control terminal of the third mirror transistor 84 is connected to a control terminal of the fourth mirror transistor 84 and to the output of the amplifier 26. The further amplifier 26 is designed as an operational transconductance amplifier. The operation of the further current source 24 is similar to the operation of the current source 14. Since the amplifier 16 and the further amplifier 26 are both realized as OTA, they generate currents proportional to differences in their voltage inputs. The current outputs of the amplifier 16 and the further amplifier 26 are mirrored to generate the source current IPC and the further source current INC, respectively.

FIG. 3 shows an exemplary arrangement comprising the voltage converter 10 according to one of the FIGs. 1A to 1D. The arrangement further comprises a light source 90. The light source 90 is connected to the output 12 of the voltage converter 13 and to the further output 23 of the voltage converter 10. The light source 90 is additionally connected to the reference potential terminal 15. The light source 90 comprises a light emitting diode. The light emitting diode is realized as an organic light emitting diode, abbreviated OLED. The light source 90 is realized as a matrix. The light source 90 is implemented as an active-matrix organic light-emitting diode, abbreviated AMOLED. The voltage converter 10 provides a positive and a negative supply to the light source 90. The voltage converter 10 additionally drives a logic circuit 91 which is comprised by the light source 90. The light source 90 requires both an output voltage VPOS with a positive polarity with respect to the reference potential terminal 15 and a further output voltage VNEG with a negative polarity with respect to the reference potential terminal 15. The voltage converter 10 advantageously provides a very small imbalance of the output voltage VPOS and of the further output voltage VNEG. The imbalance in load for an exemplary embodiment of a light source 90 having the area 10 cm * 5 cm may be less than 5 mA.

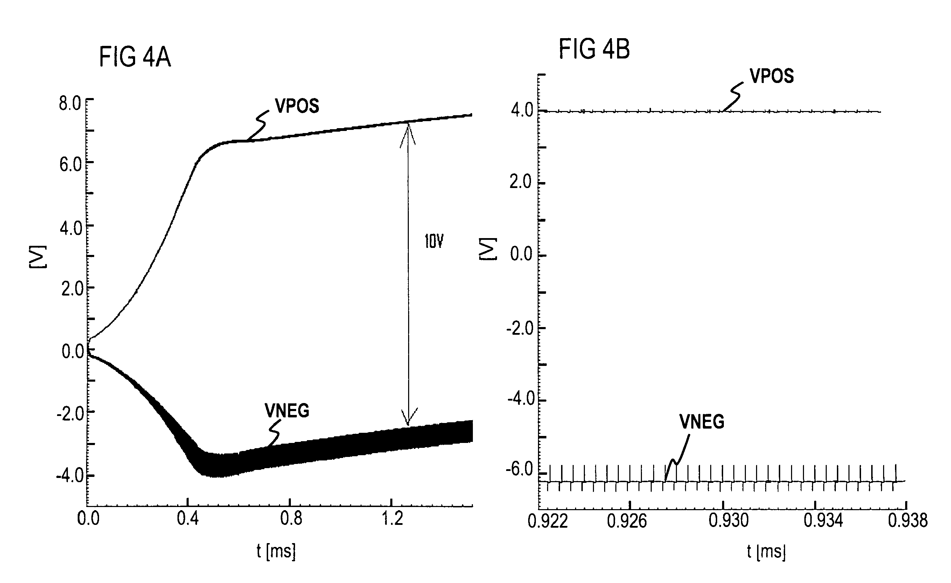

FIGs. 4A and 4B show exemplary characteristics of a voltage converter 10 which are achieved by simulation. The output voltage VPOS and the further output voltage VNEG are shown in dependency of the time t. The voltage difference between the output 12 and the further output 23 is 10 V. In FIG. 4A, the voltage converter 10 is shown in case the load balancing is switched off; thus, the current source 14 and the further current source 24 are turned off. This leads to a deviation of the output voltage VPOS from the predetermined value. Further on, the further output voltage VNEG not only shows a deviation from the predetermined value but also additional fluctuations. In FIG. 4B, the output voltage VPOS and the further output voltage VNEG are constant due to the regulation shown in FIG. 1A. Figure 4B shows a steady state. In an exemplary embodiment, the output voltage VPOS obtains a value of 4 V and the further output voltage VNEG has a value of -6 V. The load requires a current of 200 mA. The input voltage VIN equals 3.7 V. The load current from VPOS to VNEG equals 200mA. The load current on VNEG is 20mA. The load current on VPOS is automatically regulated. The inductivity of the inductor 37 is 4.7 μH. According to this example, the capacitance 21, 31 have the values 4 μF and 6 μF respectively.

Reference numerals

| 10 | voltage converter |
| 11 | input |
| 12 | output |
| 13 | switching arrangement |
| 14 | current source |
| 15 | reference potential terminal |
| 16 | amplifier |
| 17 | voltage divider |
| 18 | first divider resistor |
| 19 | second divider resistor |
| 20 | voltage source |
| 21 | storage capacitor |
| 22 | load resistor |
| 23 | further output |
| 24 | further current source |
| 26 | further amplifier |
| 27 | further voltage source |
| 28 | further voltage divider |
| 29 | third divider resistor |
| 30 | fourth divider resistor |
| 31 | further storage capacitor |
| 32 | further load resistor |
| 33 | first switch |

| 34 | second switch |
| 35 | first coupling terminal |
| 36 | second coupling terminal |
| 37 | inductor |
| 38 | first rectifier |
| 39 | second rectifier |
| 40 | controlling unit |
| 41 | controlling amplifier |
| 42 | additional voltage divider |
| 43 | fifth divider resistor |
| 44 | sixth divider resistor |
| 45 | reference voltage source |
| 46 | current sensor |
| 47 | oscillator |
| 60 | further controlling amplifier |
| 61 | further current sensor |
| 62 | current signal source |
| 63 | further reference voltage source |
| 70 | adder |
| 80 | current mirror |
| 81 | first mirror transistor |
| 82 | second mirror transistor |
| 83 | further current mirror |
| 84 | third mirror transistor |
| 85 | fourth mirror transistor |
| 90 | light source |
| 91 | control circuit |
| A | first phase |
| A1 | phase |

| | |
|---|---|
| A2 | phase |
| B | second phase |
| C | third phase |
| D | duration |
| GND | reference potential |
| IG | ground current |
| IL | inductor current |
| ILN, ILP | load current |
| INC | further source current |
| INCS | further current sensor signal |
| IPC | source current |
| IPCS | further current sensor signal |
| IREF4 | reference signal |
| SC1 | control signal |
| SC2 | further control signal |
| SC3 | controlling signal |
| SC4 | further controlling signal |
| SCL | clock signal |
| SIL | inductor current signal |
| S1 | first signal |
| S2 | second signal |
| T | cycle time |
| ton, toff, ton1 | duration |
| toff1, ton2, toff2 | duration |
| t1 | first point of time |
| t2 | second point of time |
| VIN | input voltage |
| VNEG | further output voltage |
| VPOS | output voltage |

| VREF | set voltage |
| VREF1 | reference voltage |
| VREF2 | further reference voltage |
| VREF3 | set voltage |
| VREF4 | further set voltage |
| V11 | input voltage |
| V21 | further input voltage |
| V31 | first input voltage |
| V41 | second input voltage |

**Claims**

1. Voltage converter, comprising:

   - an input (11) for receiving an input voltage (VIN),
   - an output (12) for providing an output voltage (VPOS),
   - a further output (23) for providing a further output voltage (VNEG), wherein the output voltage (VPOS) and the further output voltage (VNEG) have opposite polarities,
   - a switching arrangement (13) that is coupled to the input (11) of the voltage converter (10), the output (12) of the voltage converter (10) and the further output (23) of the voltage converter (10), and
   - a current source (14) for controlling the absolute value of the output voltage (VPOS) by reducing the absolute value of the output voltage (VPOS) by means of a source current (IPC) through the current source (14), wherein the source current (IPC) depends on the output voltage (VPOS) and a predetermined value of the output voltage (VPOS).

2. Voltage converter according to claim 1,
   wherein a duration (ton, toff) of at least one phase (A, B) of operation of the switching arrangement (13) is controlled for controlling the sum of the absolute value of the output voltage (VPOS) and the absolute value of the further output voltage (VNEG).

3. Voltage converter according to claim 1 or 2,
   wherein the current source (14) is arranged between the output (12) of the voltage converter (10) and a reference potential terminal (15).

4. Voltage converter according to claim 1 or 2,
   wherein the current source (14) is arranged between the output (12) of the voltage converter (10) and the input (11) of the voltage converter (10).

5. Voltage converter according to claim 3 or 4,
   the current source (14) comprising a current mirror (80) with a first and a second mirror transistor (81, 82), wherein the first mirror transistor (81) couples the output (12) of the voltage converter (10) to the reference potential terminal (15) or to the input (11) of the voltage converter (10), respectively.

6. Voltage converter according to one of claims 1 to 5,
   comprising a further current source (24) for controlling the absolute value of the further output voltage (VNEG) by reducing the absolute value of the further output voltage (VNEG) by means of a further source current (INC) through the further current source (24), wherein the further source current (INC) depends on the further output voltage (VNEG) and a predetermined value of the further output voltage (VNEG).

7. Voltage converter according to claim 6,
   wherein the further current source (24) is arranged between the further output (23) of the voltage converter (10) and a reference potential terminal (15).

8. Voltage converter according to one of claims 1 to 7, comprising an amplifier (16) with

   - a first input which is coupled to the output (12) of the voltage converter (10),
   - a second input to which a reference voltage (VREF1) is provided and
   - an output which is coupled to a control terminal of the current source (14).

9. Voltage converter according to one of claims 1 to 8, wherein the switching arrangement (13) is controlled such that the difference between the sum of the absolute value of the output voltage (VPOS) and the absolute value of the further output voltage (VNEG) and the sum of a predetermined value of the absolute value of the further output voltage (VNEG) and the predetermined value of the absolute value of the output voltage (VPOS) is minimized.

10. Voltage converter according to one of claims 1 to 9, comprising

    - a controlling amplifier (41) with

       - a first input which is coupled to the output (12) of the voltage converter (10) and to the further output (23) of the voltage converter (10),
       - a second input to which a set voltage (VREF3) is provided and
       - an output which is coupled to an input terminal of a controlling unit (40), and

    - the controlling unit (40) with at least one output which is connected to the switching arrangement (13).

11. Voltage converter according to one of claims 1 to 10, the switching arrangement (13) comprising

    - a first switch (33) which is arranged between the input terminal (11) of the voltage converter (10) and a first coupling terminal (35) for coupling with an inductor (37) and
    - a second switch (34) which is arranged between a second coupling terminal (36) for coupling with the inductor (37) and a reference potential terminal (15).

12. Voltage converter according to claim 11,
    the switching arrangement (13) comprising

    - a first rectifier (38) which is arranged between the further output (23) of the voltage converter (10) and the first coupling terminal (35) and
    - a second rectifier (39) which is arranged between the second coupling terminal (36) and the output (12) of the voltage converter (10).

13. Voltage converter according to claim 11 or 12,
    wherein the controlling unit (40) is configured to set the first and the second switch (33, 34) in a conducting state in a first phase (A) of operation of a cycle and to set the first and the second switch (33, 34) in a non-conducting state in a second phase (B) of operation of the cycle.

14. Voltage converter according to one of claims 1 to 13,
    the switching arrangement (13) comprising the maximum of one inductor (37).

15. Method for voltage conversion, comprising

    - converting an input voltage (VIN) into an output voltage (VPOS) and a further output voltage (VNEG), and
    - controlling the output voltage (VPOS) by reducing the output voltage (VPOS) by means of a source current (IPC) that depends on the output voltage (VPOS) and a predetermined value of the output voltage (VPOS).

FIG 1A

FIG 1B

FIG 1C

EP 2 453 565 A1

FIG 1D

EP 2 453 565 A1

FIG 2A

FIG 3

FIG 2B

EP 2 453 565 A1

FIG 4A

FIG 4B

EP 2 453 565 A1

Europäisches
Patentamt
European
Patent Office
Office européen
des brevets

**EUROPEAN SEARCH REPORT**

Application Number

EP 10 01 4631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/143309 A1 (ODELL ARTHUR B [US] ET AL) 19 June 2008 (2008-06-19) | 1-3,5-9, 15 | INV. H02M3/156 H02M3/158 |
| Y | * figures 1,2 * <br> * paragraphs [0017], [0020] * <br> * paragraph [0028] - paragraph [0030] * <br> ----- | 11-14 | |
| Y | DE 33 16 251 A1 (BOSCH GMBH ROBERT [DE]) 8 November 1984 (1984-11-08) | 11-14 | |
| A | * figures 1-3 * <br> ----- | 1-10 | |
| A | BENADERO L ET AL: "Stability analysis of a single inductor dual switching dc-dc converter", MATHEMATICS AND COMPUTERS IN SIMULATION, ELSEVIER, AMSTERDAM, NL, vol. 71, no. 4-6, 19 June 2006 (2006-06-19), pages 256-269, XP025112565, ISSN: 0378-4754, DOI: 10.1016/J.MATCOM.2006.02.009 [retrieved on 2006-06-19] * figure 2 * <br> ----- | 1-15 | |
| A,D | DE 10 2006 032418 A1 (AUSTRIAMICROSYSTEMS AG [AT]) 17 January 2008 (2008-01-17) * paragraph [0077] - paragraph [0080] * * figure 9 * <br> ----- | 1-15 | TECHNICAL FIELDS SEARCHED (IPC) <br> H02M G05F |
| A,D | US 2009/167264 A1 (BAYER ERICH [DE] ET AL) 2 July 2009 (2009-07-02) * figures 1,4a,4b * * paragraph [0026] - paragraph [0028] * <br> ----- | 1-15 | |
| A | US 2003/117209 A1 (TSUCHIYA CHIKARA [JP] ET AL) 26 June 2003 (2003-06-26) * figures 1-4 * * paragraph [0037] - paragraph [0046] * <br> ----- | 1-15 | |

-/--

The present search report has been drawn up for all claims

| Place of search | Date of completion of the search | Examiner |
|---|---|---|
| The Hague | 25 August 2011 | Gotzig, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

# EUROPEAN SEARCH REPORT

Application Number

EP 10 01 4631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/143309 A1 (ODELL ARTHUR B [US] ET AL) 19 June 2008 (2008-06-19) * figures 1,2 * | 1-3,5-9, 15 | INV. H02M3/156 H02M3/158 |
| Y | * paragraphs [0017], [0020] * * paragraph [0028] - paragraph [0030] * | 11-14 | |
| Y | DE 33 16 251 A1 (BOSCH GMBH ROBERT [DE]) 8 November 1984 (1984-11-08) | 11-14 | |
| A | * figures 1-3 * | 1-10 | |
| A | BENADERO L ET AL: "Stability analysis of a single inductor dual switching dc-dc converter", MATHEMATICS AND COMPUTERS IN SIMULATION, ELSEVIER, AMSTERDAM, NL, vol. 71, no. 4-6, 19 June 2006 (2006-06-19), pages 256-269, XP025112565, ISSN: 0378-4754, DOI: 10.1016/J.MATCOM.2006.02.009 [retrieved on 2006-06-19] * figure 2 * | 1-15 | |
| A,D | DE 10 2006 032418 A1 (AUSTRIAMICROSYSTEMS AG [AT]) 17 January 2008 (2008-01-17) * paragraph [0077] - paragraph [0080] * * figure 9 * | 1-15 | TECHNICAL FIELDS SEARCHED (IPC) H02M G05F |
| A,D | US 2009/167264 A1 (BAYER ERICH [DE] ET AL) 2 July 2009 (2009-07-02) * figures 1,4a,4b * * paragraph [0026] - paragraph [0028] * | 1-15 | |
| A | US 2003/117209 A1 (TSUCHIYA CHIKARA [JP] ET AL) 26 June 2003 (2003-06-26) * figures 1-4 * * paragraph [0037] - paragraph [0046] * | 1-15 | |

-/--

The present search report has been drawn up for all claims

| Place of search | Date of completion of the search | Examiner |
|---|---|---|
| The Hague | 25 August 2011 | Gotzig, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 10 01 4631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 522 110 B1 (IVANOV VADIM V [US]) 18 February 2003 (2003-02-18) * figure 1 * * column 2, line 53 - column 7, line 38 * | 1-15 | |
| A | BAYER E ET AL: "A Single-Inductor Multiple-Output Converter with Peak Current State-Machine Control", APPLIED POWER ELECTRONICS CONFERENCE AND EXPOSITION, 2006. APEC '06. T WENTY-FIRST ANNUAL IEEE MARCH 19, 2006, PISCATAWAY, NJ, USA,IEEE, PISCATAWAY, NJ, USA, 19 March 2006 (2006-03-19), pages 153-159, XP010909937, DOI: 10.1109/APEC.2006.1620531 ISBN: 978-0-7803-9547-3 * figures 3,5 * * paragraph [000D] * | 1-15 | |
| A | BAYER E ET AL: "Charge pump with ACTIVE CYCLE regulation -closing the gap between linear- and skip modes", POWER ELECTRONICS SPECIALISTS CONFERENCE, 2000. PESC 00. 2000 IEEE 31S T ANNUAL 18-23 JUNE 2000, PISCATAWAY, NJ, USA,IEEE, vol. 3, 18 June 2000 (2000-06-18), pages 1497-1502, XP010518979, ISBN: 978-0-7803-5692-4 * figure 2 * | 1 | TECHNICAL FIELDS SEARCHED (IPC) |
| A | US 2003/006650 A1 (TANG BENJAMIM [US] ET AL) 9 January 2003 (2003-01-09) * figures 1,7 * * paragraphs [0032], [0034], [0037] * | 1,5 | |

The present search report has been drawn up for all claims

| Place of search | Date of completion of the search | Examiner |
|---|---|---|
| The Hague | 25 August 2011 | Gotzig, Bernhard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 01 4631

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2011

| Patent document cited in search report | | Publication date | Patent family member(s) | | Publication date |
|---|---|---|---|---|---|
| US 2008143309 | A1 | 19-06-2008 | CN 101207330 A<br>EP 1936793 A1<br>JP 2008154448 A | | 25-06-2008<br>25-06-2008<br>03-07-2008 |
| DE 3316251 | A1 | 08-11-1984 | AT 381813 B<br>JP 60121958 A | | 10-12-1986<br>29-06-1985 |
| DE 102006032418 | A1 | 17-01-2008 | NONE | | |
| US 2009167264 | A1 | 02-07-2009 | DE 102007045464 A1<br>EP 2206228 A1<br>WO 2009040340 A1 | | 23-04-2009<br>14-07-2010<br>02-04-2009 |
| US 2003117209 | A1 | 26-06-2003 | CN 1430326 A<br>DE 60213754 T2<br>EP 1324477 A2<br>JP 3888895 B2<br>JP 2003186552 A<br>KR 20030053049 A<br>TW 588498 B | | 16-07-2003<br>30-11-2006<br>02-07-2003<br>07-03-2007<br>04-07-2003<br>27-06-2003<br>21-05-2004 |
| US 6522110 | B1 | 18-02-2003 | NONE | | |
| US 2003006650 | A1 | 09-01-2003 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10206032418 A1

- US 20090167264 A1